# EUROPEAN PATENT SPECIFICATION

(11) **EP 1 639 906 B1**
(45) Date of publication and mention of the grant of the patent: **28.11.2007**
(21) Application number: 05107913.5
(22) Date of filing: 30.08.2005
(51) Int. Cl.: A23N 7/02, A47J 17/18

(54) **Peeling machine**
Schälmaschine
Machine à peler

(30) Priority: 03.09.2004 FI 20045325
(43) Date of publication of application: 29.03.2006
(73) Proprietor: Norrvik Product Ab Oy, 64320 Dagsmark (FI)
(72) Inventor: Norrvik, Egil, 64320, Dagsmark (FI)
(74) Representative: Niemi, Hakan Henrik

(56) References cited:
- DE-C1- 10 230 627
- GB-A- 1 267 795
- US-A- 4 335 650
- US-A- 4 442 764
- US-B1- 6 167 801

## Description

### TECHNICAL AREA

The present invention relates to a peeling machine, which refers to a device for mechanical peeling of root vegetables, such as potatoes and the like products. The device is also suitable for peeling long and narrow root vegetables, such as carrots, as well as fruits. A peeling machine according to the present construction utilizes rotating cutting blades in the peeling.

### PRIOR ART

It is long known and well-tried to mechanically peel root vegetables, such as potatoes, with mechanical knife peeling devices. Such devices have a circular casing surface that forms a container for the product to be peeled. In order to carry out the peeling, this casing surface is provided with rotating cutting blades in its inside. The peeling machine according to publication CH 505 564, for instance, has a circular casing as well as a basket-like container the inside of which is, all the way round, provided with vertical blades. Also the rotating round bottom of the peeling machine can be provided with blades.

The peeling machine according to publication US 4,143,593 has a tight circular casing the inside of which is, all the way round, provided with round rotating plates with knives, placed on edge along the inside. In a peeling machine according to US 4 442 764 the peeling bottom part comprises an abrasive layer.

These known peeling machines are what are called portion-peeling machines, which are filled with a given amount of root vegetables (a portion) that is subsequently peeled, after which the peeling machine is emptied. A portion scale is needed to portion the root vegetables. Since the portion is emptied at one time, the after-cleaning of the peeled product becomes difficult, because a relatively large number of peeled products are to be attended to at the same time. This type of peeling machine also requires plenty of water in the peeling, which means that there will be a large amount of wastewater that causes an environmental load.
In US 4 442 764 the peeling bottom part comprises fins on the side opposite the abrasive layer. These fins produce a vortex in the liquid mixture formed by the water and the peeling pellicles, sucking the mixture from the peeling container and hurling the wastewater mixture towards an evacuation location.

Another type of knife peeling device is shown for example in publication DE 102 30 627. This peeling machine has a circular casing with a rotating bottom plate provided with cutting blades. This peeling machine has a propeller wheel supplying the product to be peeled around the container. The peeling machine also has a throw member moving the product about during the peeling and finally attending to the discharge of the product from the peeling machine via an outlet opening. This peeling machine has thus a continuous product flow-through. A throw member according to this solution causes, however, impact damages (what are called blue spots) on the product to be peeled. This type of peeling machine also requires a relatively large amount of water in the peeling.

### PRESENTATION OF THE PROBLEM

The problems of known solutions can be substantially avoided by means of the present invention. The invention enables peeling substantially without water, a continuous product flow-through with uniform peeling and smooth discharge without throw members and without any impact damages of the peeled product.

This is achieved in accordance with the invention by providing a peeling machine according to the invention with the characterizing features disclosed in claim 1. The subsequent dependent claims disclose suitable further embodiments and variations of the invention that still improve the functioning of the invention.

In the following description, the terms "up", "down", "above", "below" etc. refer to directions in relation to the peeling machine or its structural details as shown in the attached figures.

Advantages and details of the invention become apparent from the following description.

### BRIEF DESCRIPTION OF THE FIGURES

In the following, the invention is described in more detail with reference to the drawing, in which
Figure 1 shows a peeling machine according to the invention as a vertical cross-section;
Figure 2 shows a peeling machine according to Figure 1 seen from above and as a partial cut-through;
Figure 3 shows a peeling machine seen from above, illustrating different positioning options for the inlet opening;
Figure 4 shows a particular embodiment of a suction arrangement fitted to a peeling plate of the peeling machine;
Figure 5 shows an alternative peeling machine as a vertical cross-section;
Figure 6 shows schematically a particular embodiment of a fan arrangement fitted to a peeling plate of the peeling machine;
Figure 7 shows a vertical cross-section of a fan arrangement according to Figure 6;
Figure 8 shows an arrangement of a driving belt of the peeling machine; and
Figure 9 shows an alternative arrangement of a driving belt of the peeling machine.

### PREFERRED EMBODIMENT

A preferred embodiment of the peeling machine is described in the following with reference to the above-mentioned figures. Hereby, the solution comprises the structural parts shown in the figures, each of which is designated with a corresponding reference numeral. These reference numerals correspond to the reference numerals given in the description below.

The present embodiment of the peeling machine is constructed on a substantially stationary frame 1, which is in this embodiment circular. This frame comprises an outer, substantially cylindrical drum 2 arranged vertically and an inner drum 3 parallel to the outer drum. Further, the frame comprises a planar, round bottom 4 arranged horizontally, substantially perpendicularly to the drums. The drums and the bottom together define a peeling space 5 that has a cross-section substantially corresponding to a circle.

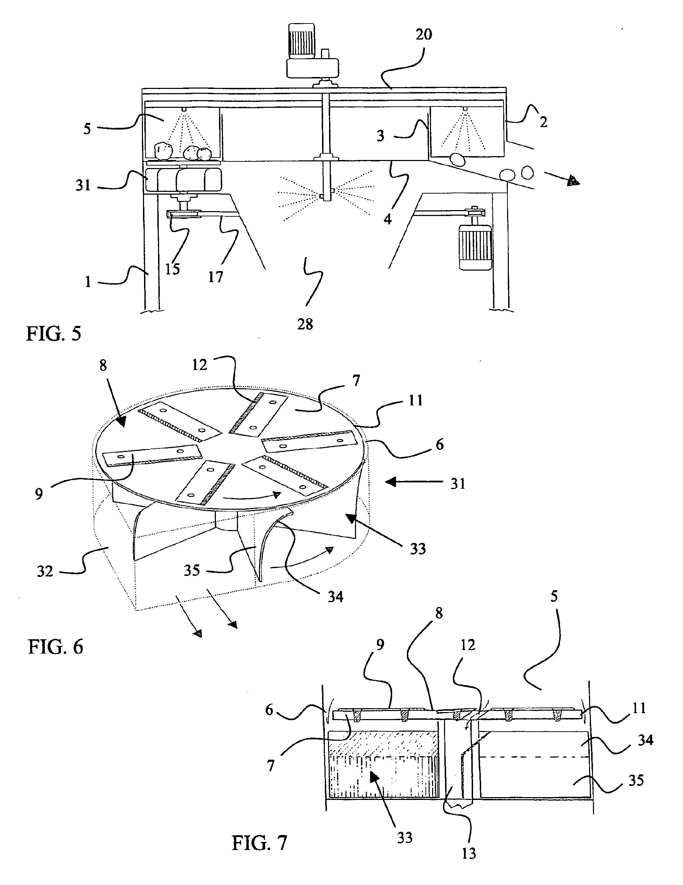

The bottom 4 is provided with a plurality of circular openings 6 in the peeling space 5. Each of these openings is provided with a peeling plate 7 arranged to extend substantially over the whole opening, as can be seen in Figures 6 and 7. The peeling plate comprises, on its upper surface 8 directed towards the peeling space, a plurality of blades 9 arranged to extend substantially radially along the upper surface of the peeling plate, from its centre 10 towards its outer edge 11. The peeling plates advantageously have a somewhat inclined recess for the blades, whereby the front edges of the blades protrude to some extent from the upper surface of the peeling plate according to Figure 7. The thickness of the skin to be peeled off can be advantageously adjusted with an appropriate base under the blades.

The peeling plate 7 comprises in connection with these blades 9 also through openings, i.e. peeling openings 12, arranged in front of each blade and intended for removing skin remains from the peeling space 5. The peeling opening advantageously extends over the whole length of the blade.

The peeling plates can also be completely or partially provided with a grinding coating known as such, for instance a silicon carbide coating. The number of peeling plates as well as the number of their blades can vary as required.

The peeling plate 7 is arranged to be rotatable in relation to the bottom of the peeling machine, whereby it is fixed to a shaft 13 and is operated to rotate by means of a driving member known as such, arranged at the shaft. The peeling plates can have rotation directions and speeds that deviate from each other.

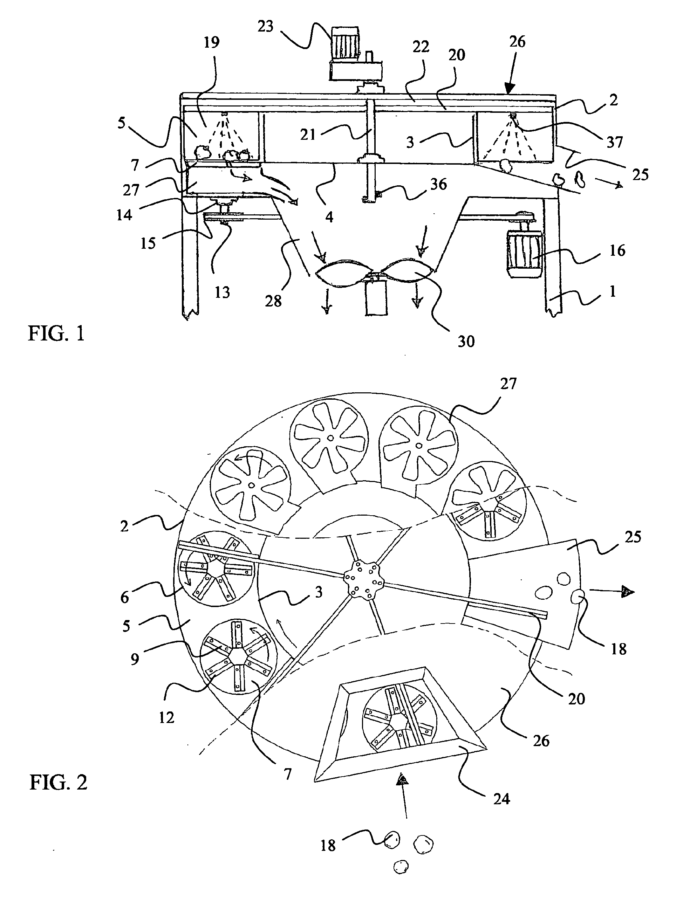

The driving member can be arranged at each of the shafts 13 of the peeling plates, or alternatively it can be common to all shafts according to Figure 1, for example. In this embodiment, the shaft is mounted on a bearing in a bearing housing 14 in the frame. Lowest on the shaft there is, for example, a belt pulley 15 for operating the cutting unit formed by the peeling plate 7. Advantageously, the driving member 16 that transmits the rotation force via a driving belt 17 or driving chain to the cutting units has an adjustable speed.

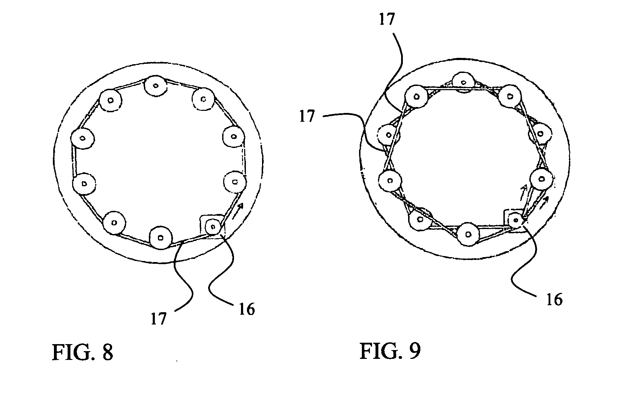

The belt pulleys 15 of the shaft 13 can be mounted on a common horizontal plane in accordance with Figure 8. The belt pulleys can also be mounted in a mutually displaced position in the longitudinal direction of the shaft. Advantageously, the belt pulleys are in this embodiment on two parallel horizontal planes above each other according to Figure 9. In the mounting of the belt pulleys on two parallel planes, the driving member comprises two parallel driving belts 17 or driving chains. In this embodiment the driving belts run over every other belt pulley. In this way, the belt has a longer contact surface and thus a better driving effect despite slacker tension. This saves energy and increases the durability of the driving belt.

To move the products to be peeled, i.e. the peeling product 18, forwards, the present peeling machine advantageously comprises in the peeling space 5 a reel 20 provided with a push plate 19. The reel is mounted, via a driving shaft 21, on a bearing as well in the middle of the bottom 4 of the frame 1 as on a load-bearing lattice 22 upon the inner drum 2 and the outer drum 3.

The reel's 20 or the force-feeding wheel's push plate 19 divides the enclosed peeling space 5 into a plurality of compartments. These compartments rotate slowly along the peeling space, which means that the compartments moving forwards often become positioned over two rotating peeling plates 7 during the peeling, which results in a rotating, rolling movement of the peeling product. This movement prevents the product from staying up, which would cause the product to be peeled too much. Now, by contrast, the peeling is uniform and the yield is high.

In addition, the reel 20 enables continuous product flow-through in the peeling machine, which makes the after-cleaning of the peeling product 18 significantly easier and eliminates the problem of portioning and the need for a portion scale. The reel is operated by a driving member 23 via the driving shaft 21. This driving member is advantageously speed-adjustable and can also be run in opposite directions.

The reel 20 is arranged to move the peeling product 18 forwards from an inlet 24 of the peeling machine towards the outlet 25 of the peeling machine to remove the peeling product from the machine.

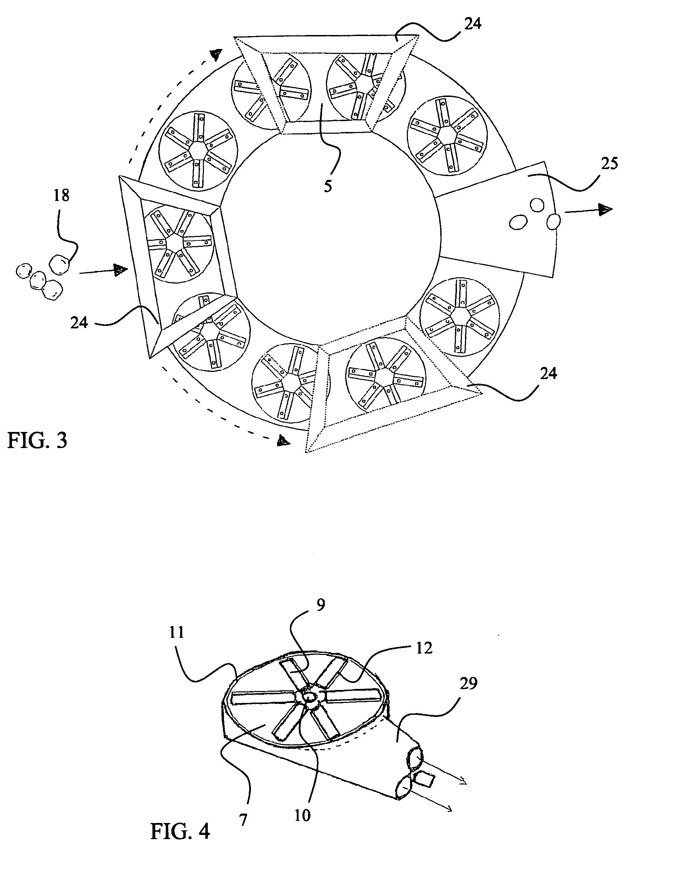

The inlet 24 is advantageously formed by a hopper that can be placed anywhere round the peeling space 5 in accordance with Figure 3. By selecting different positions of the inlet in relation to the outlet, the peeling product can be subjected to longer or shorter peeling. By adjusting the peeling time in this way the capacity of the peeling machine can be regulated by simple means. The hopper of the inlet forms a part of a substantially circular cover plate 26 or grating arranged rotatably on the frame, whereby the position of the inlet is selected by rotating the cover plate in relation to the peeling space.

The outlet 25 is formed as a fixed part of the frame 1, whereby the bottom of the outlet has an inclination from the inner drum 2 outwards to extend to the outside of the outer drum 3. The outlet thus extends through the whole width of the peeling space, which means that the peeling product 18 rolls smoothly out of the machine.

To remove the peeling remains from the peeling space 5, the present peeling machine is provided with a suction arrangement 27 according to Figures 1 and 2. The purpose of this suction arrangement is to generate an underpressure at least in the vicinity of the peeling opening 12. The arrangement provides a powerfully sucking air current both through the peeling openings of the peeling plates, including their peripheries, and at possible openings between the outer edge 11 of the peeling plate and the bottom 4, to suck with it the peeling waste and other impurities down the space beneath the peeling plate and further to the middle of the peeling machine and a collecting hopper 28 therein.

An air current required for removing the peeling waste and impurities can advantageously be provided by arranging a hopper-shaped device 29 at each of the openings 6 at the bottom 4. Such a hopper is arranged tightly against the bottom, and suction is generated at the opposite end of the hopper. This suction can be provided with, for instance, a fan connected to the hopper, or an ejector connected thereto. The fan or the ejector can be placed separately on each of the peeling plates, but it is also feasible that the fan or the ejector is common to all peeling plates. In Figure 1, the fan 30 is arranged in the bottom part of the collecting hopper 28.

Figures 5 to 7 show an alternative embodiment of the suction arrangement 27. Hence, the shaft 13 of the peeling plate 7 comprises a combined propeller centrifugal fan 31, i.e. a combined fan.

The combined fan 31 with its fan housing 32 generates a powerfully sucking air current through the peeling openings 12 of the peeling plates 7 and the outer periphery of the peeling plates. This air current sucks with it the peeling waste and other impurities down the fan housing and to the middle part and collecting hopper 28 of the peeling machine. By inclining the peeling opening together with the blade 9 according to Figure 7, an inward-sucking effect is generated which intensifies the effect of the outward-sucking air current.

The presented combined fan comprises a fan housing 32 below the peeling plate 7, positioned concentrically with it, and a fan blade 33. The fan blade obtains its driving force advantageously from the shaft 13 of the peeling plate, whereby the relative speed of the fan blade and the peeling plate may be varied.

The fan blade 33 is advantageously made up by a construction of two parts in its longitudinal direction. Hereby, the fan blade half directed towards the peeling plate 7 is formed as a substantially normal propeller fan blade 34, whereas the other half is formed as a centrifugal fan blade 35. Thus, the half directed towards the peeling plate functions as a propeller fan and generates powerful suction through the peeling plate, whereas the lower part removes peeling waste and other impurities flowing into the fan housing towards the collecting hopper 28.

This sucking air current generated with the suction arrangement 27 allows the peeling process to be carried out completely without water. Owing to the effective cleaning, the peeling space 5 remains very clean, and the quality and durability of the peeling product 18 are improved. In accordance with Figure 2, the peeling machine can, however, be provided with water sprinklers 36 and 37 known as such to clean the interior of the peeling machine quickly and efficiently.

The above description and the related figures are only intended for illustrate the present solution for construction of a peeling machine. Therefore, the solution is not restricted to the above or to the embodiments described in the attached claims but a plurality of variations or alternative embodiments are feasible within the scope of the attached claims.

## Claims

1. A peeling machine for peeling root vegetables, fruits and the like peeling products (18) essentially without water, comprising
a frame (1),
a peeling space (5) arranged therein,
the peeling space including a rotating peeling plate (7) provided in a round opening (6),
the peeling machine further comprising a suction arrangement (27),
directed towards a collecting hopper (28) positioned below the peeling space (5),
**characterized in that**
the essentially circular peeling space (5) comprises a bottom (4) having a number of openings (6) with rotating peeling plates (7) arranged therein
the peeling plates (7) comprising a number of blades (9) and peeling openings (12),
the suction arrangement (27) being arranged below the peeling plates (7) and comprising
at least one fan (30, 31) arranged to co-operate with said peeling plates (7),
the fan being arranged to generate an air current directed from the peeling space (5), through the openings (6) and the peeling plates (7) arranged therein , to the collecting hopper (28),
said fan (30, 31) generating an underpressure in the vicinity of the peeling openings (12),
thus being arranged to transport peeling waste and other impurities to the collecting hopper.

2. A peeling machine according to claim 1, **characterized in that** the fan (31) is arranged concentrically with a shaft (13) of the peeling plate (7).

3. A peeling machine according to claim 2, **characterized in that** the fan (31) comprises a combined propeller centrifugal fan.

4. A peeling machine according to claim 3, **characterized in that** the propeller centrifugal fan (31) comprises a fan housing (32) and a fan blade (33), the fan blade advantageously comprising a construction of two parts in its longitudinal direction, whereby the fan blade part directed towards the peeling plate (7) is formed as a substantially normal propeller fan blade (34) whereas the other half is formed as a centrifugal fan blade (35).

5. A peeling machine according to any one of the preceding claims, **characterized in that** the peeling plates (7) are completely or partially provided with a grinding coating.

6. A peeling machine according to any one of the preceding claims, **characterized in that** the peeling machine comprises an inlet (24) arranged to be displaceable around the whole peeling space (5) for regulating the capacity of the peeling machine.

7. A peeling machine according to any one of the preceding claims, **characterized in that** the peeling machine comprises an outlet for removing the peeling products (18), whereby the outlet (25) has an inclination of the bottom, extending over the whole width of the peeling space (5).

8. A peeling machine according to claim 6 and 7, **characterized in that** the peeling machine comprises a reel (20) arranged rotatably therein and provided with one or more push plates (19) arranged to force-feed the peeling product (18) continuously from the inlet (24) of the peeling machine over one or more peeling plates (7) towards the outlet (25) of the peeling machine.

## Patentansprüche

1. Schälmaschine zum Schälen von Wurzelgemüse, Früchten und ähnlichen Schalenprodukten (18), im Wesentlichen ohne Wasser, umfassend
ein Gehäuse (1),
einen darin angeordneten Schälbereich (5),
wobei der Schälbereich eine rotierende Schälplatte (7) einschließt, die in einer runden Öffnung (6) bereitgestellt wird,
wobei die Schälmaschine ferner eine Absauganordnung (27) umfasst,
die zu einem Sammelrichter (28) hin gerichtet ist, der unterhalb des Schälbereichs (5) angeordnet ist,
**dadurch gekennzeichnet, dass**
der im Wesentlichen kreisförmige Schälbereich (5) einen Boden (4) mit mehreren Öffnungen (6) mit darin angeordneten, rotierenden Schälplatten (7) umfasst,
wobei die Schälplatten (7) mehrere Messer (9) und Schälöffnungen (12) umfassen,
die Absauganordnung (27) unterhalb der Schälplatten (7) angeordnet ist und mindestens einen Ventilator (30, 31) umfasst, der so angeordnet ist, dass er mit den Schälplatten (7) zusammenwirkt,
und der Ventilator so angeordnet ist, dass er einen Luftstrom erzeugt, der von dem Schälbereich (5) durch die Öffnungen (6) und die darin angeordneten Schälplatten (7) zu dem Sammeltrichter (28) hin gerichtet ist,
und der Ventilator (30, 31) in der Nähe der Schälöffnungen (12) einen Unterdruck erzeugt,
wobei diese so angeordnet sind, dass sie Schälabfälle und andere Verunreinigungen zu dem Sammeltrichter transportieren.

2. Schälmaschine nach Anspruch 1, **dadurch gekennzeichnet, dass** der Ventilator (31) konzentrisch mit einer Welle (13) der Schälplatte (7) angeordnet ist.

3. Schälmaschine nach Anspruch 2, **dadurch gekennzeichnet, dass** der Ventilator (31) einen kombinierten Axiallüfter-Radialventilator umfasst.

4. Schälmaschine nach Anspruch 3, **dadurch gekennzeichnet, dass** der Axiallüfter-Radialventilator (31) ein Ventilatorgehäuse (32) und einen Ventilatorflügel (33) umfasst, wobei der Ventilatorflügel vorteilhafter Weise eine Konstruktion aus zwei Teilen in seiner längs verlaufenden Richtung umfasst, wodurch der Teil des Ventilatorflügels, der zu der Schälplatte (7) hin gerichtet ist, als ein im Wesentlichen normaler Ventilatorflügel eines Axiallüfters (34) ausgebildet ist, während die andere Hälfte als ein Flügel eines Radialventilators (35) ausgebildet ist.

5. Schälmaschine nach einem der vorhergehenden Ansprüche, **dadurch gekennzeichnet, dass** die Schälplatten (7) vollständig oder zum Teil mit einer Schleifbeschichtung bereitgestellt werden.

6. Schälmaschine nach einem der vorhergehenden Ansprüche, **dadurch gekennzeichnet, dass** die Schälmaschine einen Einlass (24) umfasst, der so angeordnet ist, dass er zum Einstellen der Füllmenge der Schälmaschine um den gesamten Schälbereich (5) herum verschiebbar ist.

7. Schälmaschine nach einem der vorhergehenden Ansprüche, **dadurch gekennzeichnet, dass** die Schälmaschine einen Auslass zum Entfernen der Schälprodukte (18) umfasst, wodurch der Auslass (25) eine Neigung des Bodens aufweist, die sich über die gesamte Breite des Schälbereichs (5) erstreckt.

8. Schälmaschine nach Anspruch 6 und 7, **dadurch gekennzeichnet, dass** die Schälmaschine eine Rolle (20) umfasst, die darin drehbar angeordnet ist und mit einer oder mehreren Platten zum Drücken (19) bereitgestellt wird, die so angeordnet sind, dass das Schälprodukt (19) kontinuierlich von dem Einlass (24) der Schälmaschine über eine oder mehrere Schälplatten (7) zu dem Auslass (25) der Schälmaschine hin unter Druck zugeführt wird.

## Revendications

1. Machine à éplucher pour éplucher les légumes-racines, les fruits et autres produits à éplucher similaires (18), sensiblement sans eau, comprenant
■ un cadre (1),
■ un espace d'épluchage (5) disposé dans celui-ci,
■ l'espace d'épluchage comprenant une table d'épluchage rotative (7) positionnée dans une ouverture ronde (6),
■ la machine à éplucher comprenant en outre un dispositif de succion (27) orienté vers une trémie collectrice (28) positionnée en dessous de l'espace d'épluchage (5),
**caractérisée en ce que**
■ l'espace d'épluchage sensiblement circulaire (5) comprend un fond (4) présentant un certain nombre d'ouvertures (6) des plaques d'épluchage rotatives (7) étant disposées dans celles-ci,
■ les plaques d'épluchage (7) comprenant un certain nombre de lames (9) et des ouvertures d'épluchage (12),
■ le dispositif de succion (27) étant disposé en dessous des plaques d'épluchage (7) et comprenant
■ au moins un ventilateur (30, 31) disposé de manière à coopérer avec lesdites plaques d'épluchage (7),
■ disposé de manière à générer un courant d'air orienté depuis l'espace d'épluchage (5), à travers les ouvertures (6) et les plaques d'épluchage (7) disposées dans celles-ci, vers la trémie collectrice (28),
■ ledit ventilateur (30, 31) générant une sous-pression dans le voisinage des ouvertures d'épluchage (12),
■ étant ainsi disposée pour transporter les déchets d'épluchage et autres impuretés dans la trémie collectrice.

2. Machine à éplucher selon la revendication 1, **caractérisée en ce que** le ventilateur (31) est disposé de manière concentrique avec un arbre (13) de la plaque d'épluchage (7).

3. Machine à éplucher selon la revendication 2, **caractérisée en ce que** le ventilateur (31) comprend un ventilateur centrifuge hélico-centrifuge combiné.

4. Machine à éplucher selon la revendication 3, **caractérisée en ce que** le ventilateur hélico-centrifuge (31) comprend un boîtier de ventilateur (32) et une pale de ventilateur (33), la pale de ventilateur comprenant avantageusement une construction en deux parties dans son sens longitudinal, moyennant quoi la partie de pale de ventilateur orientée vers la plaque d'épluchage (7) est formée comme une pale de ventilateur hélicoïdal sensiblement normale (34), tandis que l'autre moitié est formée comme une pale de ventilateur centrifuge (35).

5. Machine à éplucher selon l'une quelconque des revendications précédentes, **caractérisée en ce que** les plaques d'épluchage (7) sont entièrement ou partiellement munies d'un revêtement abrasif.

6. Machine à éplucher selon l'une quelconque des revendications précédentes, **caractérisée en ce que** la machine à éplucher comprend une entrée (24) disposée de manière à pouvoir être déplacée autour de la totalité de l'espace d'épluchage (5) pour régler la capacité de la machine à éplucher.

7. Machine à éplucher selon l'une quelconque des revendications précédentes, **caractérisée en ce que** la machine à éplucher comprend une sortie prévue pour retirer les produits d'épluchage (18), moyennant quoi la sortie (25) comprend une inclinaison du fond s'étendant sur la largeur tout entière de l'espace d'épluchage (5).

8. Machine à éplucher selon la revendication 6 et 7, **caractérisée en ce que** la machine à éplucher comprend un rouleau (20) disposé de manière rotative dans celle-ci et muni d'une ou plusieurs plaques de poussée (19) disposées de sorte à alimenter par poussée le produit d'épluchage (18) en continu depuis l'entrée (24) de la machine à éplucher, au dessus d'une ou plusieurs plaques d'épluchage (7) vers la sortie (25) de la machine à éplucher.
